**Europäisches Patentamt**

**European Patent Office**

**Office européen des brevets**

(19)

(11) Numéro de publication: **0 033 271**
**B1**

(12) ## FASCICULE DE BREVET EUROPEEN

(45) Date de publication du fascicule du brevet: **05.12.84**

(51) Int. Cl.³: **G 21 C 7/12**

(21) Numéro de dépôt: **81400087.3**

(22) Date de dépôt: **22.01.81**

(54) **Dispositif électromagnétique du type vis-écrou à sécurité.**

(30) Priorité: **24.01.80 FR 8001515**

(43) Date de publication de la demande:
**05.08.81 Bulletin 81/31**

(45) Mention de la délivrance du brevet:
**05.12.84 Bulletin 84/49**

(84) Etats contractants désignés:
**BE DE GB IT**

(56) Documents cités:
**DE-A-2 115 486**
**DE-A-2 930 633**
**FR-A-1 241 783**
**FR-A-1 450 728**
**FR-A-2 041 170**
**FR-A-2 075 928**
**FR-A-2 320 656**
**FR-A-2 407 553**

(73) Titulaire: **JEUMONT-SCHNEIDER Société**
**anonyme dite:**
**31-32, Quai de Dion Bouton**
**F-92811 Puteaux Cedex (FR)**

(73) Titulaire: **Framatome**
**Tour Fiat 1 place de la Coupole**
**F-92400 Courbevoie (FR)**

(72) Inventeur: **Defaucheux, Jacques**
**Résidence Claude Bernard Appartement 22**
**F-59460 Jeumont (FR)**
Inventeur: **Guedj, Freddy**
**Résidence Joffre Entrée "Marne" No 93**
**F-59460 Jeumont (FR)**

(74) Mandataire: **Lejet, Christian**
**Société JEUMONT-SCHNEIDER 31-32, Quai de**
**Dion Bouton**
**F-92811 Puteaux Cedex (FR)**

EP 0 033 271 B1

Courier Press, Leamington Spa, England.

**Description**

La présente invention concerne un dispositif électromagnétique du type vis-écrou, notamment prévu pour le déplacement vertical dans une enceinte étanche amagnétique et cylindrique, des barres de commande d'un réacteur nucléaire.

De nombreux dispositifs électromagnétiques du type vis-écrou permettant le déplacement des barres de commande d'un réacteur nucléaire sont connus. De tels dispositifs sont par exemple décrits dans les brevets français FR—A—2 041 128 et FR—A—2 320 656. Toutefois, ces dispositifs présentent certains inconvénients. En effet, des pièces en matériau magnétique doivent souvent être soudées à des pièces en matériau amagnétique, le moteur doit généralement être surdimensionné du fait de la dispersion du champ magnétique due aux différents filetages actifs, enfin la vis a tendance elle-même à être saturée magnétiquement, etc.

La présente invention a pour but d'obvier à ces inconvénients à l'aide d'un dispositif simple et peu coûteux.

Un dispositif électromagnétique de type vis-écrou à sécurité est également décrit dans le brevet français FR—A—1 241 783. Ce dispositif est destiné à assurer le déplacement vertical dans une enceinte amagnétique étanche d'une barre de commande d'un réacteur nucléaire. Il comprend, autour de l'enceinte et à sa partie supérieure, un stator permettant de commander la rotation d'un arbre faisant rotor en vue d'assurer un déplacement lent de la barre, et un déplacement lent de la barre, et un électro-aimant permettant de commander la chute rapide de la barre. Or, pour se conformer aux règles de sécurité, il est nécessaire de minimiser le nombre des différents organes de commande et d'alléger le dispositif de façon sensible. En outre, une simplification du mécanisme est hautement souhaitable.

L'invention concerne donc un dispositif électromagnétique du type vis-écrou à sécurité, prévu pour le déplacement vertical dans une enceinte amagnétique étanche et cylindrique des barres de commande d'un réacteur nucléaire, comprenant en combinaison un stator disposé autour de l'enceinte à sa partie supérieure et, à l'intérieur de l'enceinte, et à sa partie supérieure, un rotor imprimant un mouvement de rotation à une tige filetée, un écrou coopérant avec celle-ci et pouvant coulisser verticalement sans tourner à l'intérieur de l'enceinte et supportant les barres de commande et une mâchoire qui, lorsqu'elle est ouverte, laisse choir au fond de l'enceinte l'ensemble constitué par la tige filetée et l'écrou solidaire des barres de commande.

Pour atteindre ces buts, selon l'invention, le rotor est libre en translation axiale le long de son arbre qu'il entraîne en rotation mais qui est fixe en translation, l'arbre se prolongeant vers le bas sur toute la hauteur de l'enceinte et entraînant la tige filetée creuse à l'extrémité supérieur de laquelle est pratiquée une gorge, coopérant avec ladite mâchoire qui est articulée et qui comprend une partie solidaire du rotor et une autre partie solidaire de l'arbre, de telle manière que la mâchoire soit actionnée par les mouvements de translation du rotor.

De préférence, la longueur de l'arbre est telle que ce dernier pénètre encore dans la tige filetée lorsque cette dernière est tombée au fond de l'enceinte étanche. Dans ce cas, des moyens sont prévus pour maintenir la mâchoire ouverte tant que la gorge de la tige filetée n'est pas en regard de la mâchoire.

L'invention sera mieux comprise et d'autres buts, avantages et caractéristiques de celle-ci apparaitront plus clairement à la lecture de la description qui suit d'un mode de réalisation de l'invention, description à laquelle deux planches de dessins sont annexées.

La figure 1 représente en coupe transversale un dispositif conforme à la présente invention, disposé de manière à assurer le déplacement des barres de commande d'un réacteur nucléaire.

Les figures 2 et 3 représentent en coupe selon respectivement les lignes II—II et III—III, le dispositif de la figure 1.

Les figures 4 et 5 représentent en vue partielle agrandie la mâchoire du dispositif de la figure 1, respectivement fermée ou ouverte.

En référence maintenant aux différentes figures, le dispositif électromagnétique du type vis-écrou, conforme à l'invention, est prévu pour assurer le déplacement vertical des barres de commande 1 du réacteur nucléaire 2. L'enceinte 3, réalisée dans un matériau amagnétique, est étanche. Elle affecte la forme d'un cylindre où il règne les mêmes conditions de température et de pression que dans le réacteur 2. A l'extérieur de l'enceinte 3 et à sa partie supérieure, le stator est constitué par un jeu de bobines 4 qui est prévu pour engendrer un champ magnétique transversal à l'intérieur de l'enceinte 3, champ pouvant tourner.

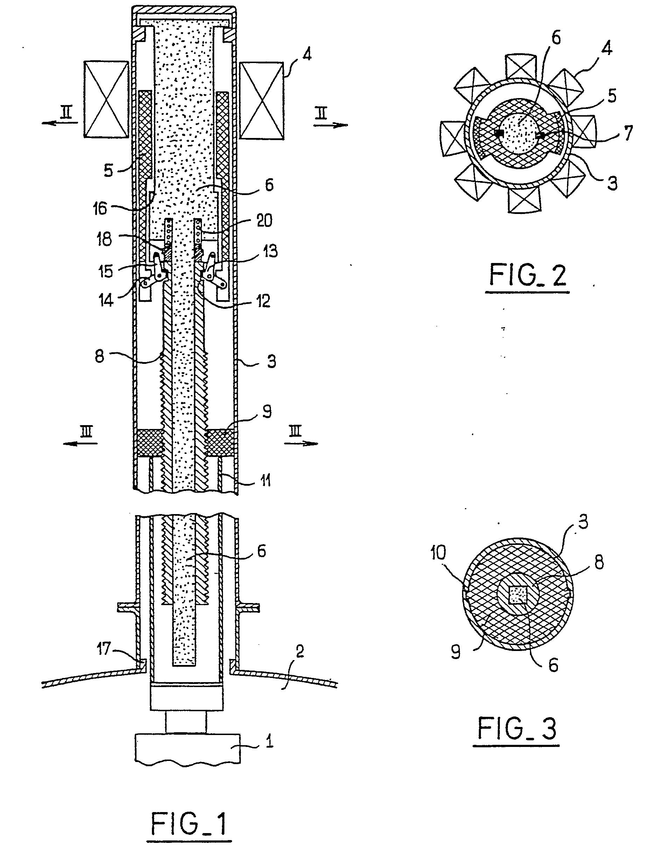

A l'intérieur de l'enceinte 3, le rotor 5 disposé dans la partie supérieure de l'enceinte, affecte la forme particulière d'un manchon en matériau magnétique comme représenté en coupe figure 2. L'arbre 6 du rotor est libre en rotation mais il est fixe en translation. Il se prolonge vers le bas sur toute la hauteur de l'enceinte. Des clavettes 7, par exemple, comme représentées figure 2, assurent la liaison angulaire entre le rotor 5 et l'arbre 6 et transmettent à ce dernier le mouvement de rotation du rotor 5 lorsque le champ magnétique engendré par le stator tourne.

Une tige filetée creuse 8 constitue la vis du dispositif. Cette tige 8 est traversée par l'arbre 6 dont elle est coaxiale, et dont la forme de la section est prévue pour lui permettre d'imprimer à la tige 8 un mouvement de rotation. Dans l'exemple représenté figure 3, cette section est de forme carrée. Bien évidemment, une autre forme pourrait être adoptée.

Un écrou 9, pouvant coulisser verticalement sans tourner à l'intérieur de l'enceinte, coopère avec la tige filetée 8, de telle manière que de la rotation de cette dernière, résulte la translation de l'écrou 9. Des ergots 10 faisant saillie à l'intérieur d'une rainure pratiquée dans l'enceinte, permettent, par exemple, d'interdire la rotation de cet écrou comme représenté figure 3. Les barres 1 de commande du réacteur 2 sont solidaires de l'écrou 9 auquel elles sont fixées par exemple à l'aide d'un tube cylindrique 11.

Une gorge 12 est pratiquée à l'extrémité supérieure de la tige filetée creuse 8 de manière à former appui pour les dents d'une mâchoire articulée 13.

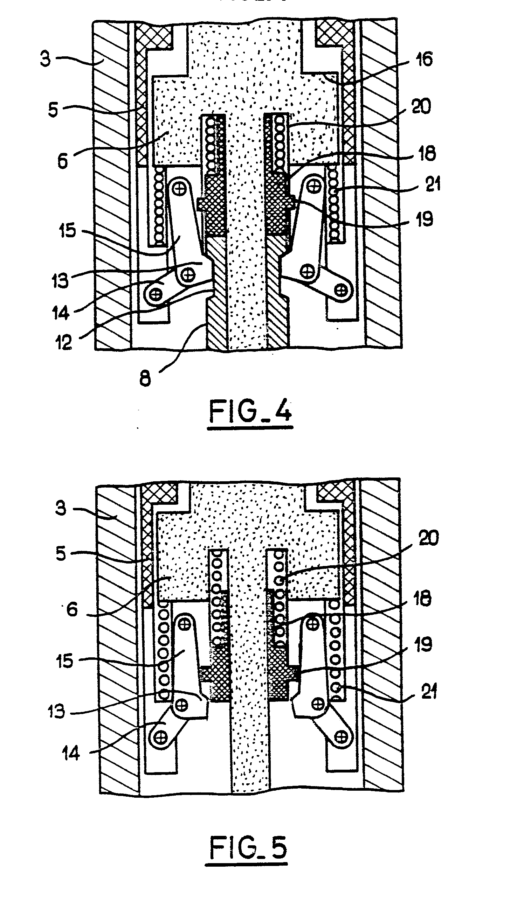

Cette mâchoire 13 est constituée de deux parties 14 et 15 respectivement solidaires du rotor 5 et de l'arbre 6, de telle manière que les dents de la mâchoire 13 soient introduites dans la gorge 12 de la tige filetée 8 lorsque le rotor 5 est attiré en position haute par le stator, et qu'elles soient hors de la gorge 12 lorsque le stator n'est pas alimenté, comme représenté plus clairement figures 4 et 5.

Lorsque les bobines 4 sont alimentées, le rotor est attiré par le stator et prend une position haute tendant à réduire la réluctance opposée au flux magnétique. Ce faisant, l'extrémité basse du rotor pousse les dents de la mâchoire 13 dans la gorge 12 prévue à cet effet dans la tige filetée par l'intermédiaire de la partie 14 de la mâchoire. Le poids de la tige 8, de l'écrou 9 et des barres de commande 1 est alors entièrement pris en charge par le rotor 5 qui adopt une position d'équilibre axiale dépendant de l'amplitude du champ magnètique engendré par les bobines.

Lorsque le champ magnétique tourne à la façon d'un moteur électrique asynchrone ou d'un moteur pas-à-pas, le rotor va suivre le mouvement de rotation en entraînant l'arbre 6. Cet arbre imprime à son tour un mouvement de rotation à la tige filetée 8 qui, par conséquent, imprime un mouvement de translation à l'écrou 9 qui peut coulisser sans tourner. Selon le sens de la rotation, les barres de commande 1 qui sont solidaires de l'écrou 9, seront ainsi déplacées vers le haut ou vers le bas de manière continue et sans à-coup.

En cas d'incident nécessitant la chute rapide des barres de commande 1 dans le coeur 2 du réacteur, ou en cas d'interruption de l'alimentation électrique des bobines 4 du stator, la sécurité est assurée par le fait que le rotor tombe en position basse n'étant plus attiré, et vient reposer sur les épaulements 16 prévus à cet effet sur l'arbre 6. La pièce 14 écarte la mâchoire qui s'ouvre; la tige filetée 8 n'étant plus retenue tombe alors en entraînant dans sa chute, qui est guidée par l'arbre 6, l'écrou 9 et les barres de commande 1.

Des ergots 17 sont par exemple prévus au pied de l'enceinte étanche 3, de manière à retenir l'écrou à l'intérieur de l'enceinte, pour pouvoir assurer ultérieurement la remontée de l'ensemble.

Cette remontée est obtenue en remettant sous tension les bobines 4 du stator, de manière à engendrer un champ électrique tournant. Le rotor 5 est alors atiré en position haute et imprime un mouvement de rotation de sens approprié à l'arbre 6, dont la longueur est prévue pour qu'elle pénètre encore dans la tige filetée 8 lorsque cette dernière est tombée au fond de l'enceinte. De ce fait, un mouvement de rotation est imprimé à la tige filetée 8. L'écrou 9 reposant sur les ergots 17 ne peut pas encore se déplacer et, par coopération avec le filetage de la tige 8, imprime à cette dernière un mouvement de translation ascendant.

Le rotor 5 étant en position haute, la mâchoire 13 est fermée. Le bord de l'extrémité supérieure de la tige filetée 8 doit de ce fait être chanfreiné de manière à pénétrer entre les dents de la mâchoire 13 qui va venir se refermer dans la gorge 12. A ce moment, la tige filetée 8 est bloquée en translation et l'écrou 9 commence son mouvement ascendant à son tour, si le champ magnétique continue à tourner, assurant ainsi le relèvement des barres de commande 1.

Des moyens peuvent être prévus pour éviter que la mâchoire 13 soit fermée pendant la remontée de la tige filetée 8. De tels moyens sont représentés figures 3 et 4, respectivement en position fermée et ouverte de la mâchoire 13.

Un manchon 18 pourvu d'un ergot 19 peut coulisser dans une chambre annulaire prévue à cet effet dans l'arbre 6. Ce manchon 18 repose normalement sur l'extrémité supérieure de la tige filetée 8, ce qui a pour effet de comprimer un ressort 20, le manchon étant ainsi repoussé dans la chambre. En l'absence de la tige filetée 8, le ressort 20 pousse le manchon 18 hors de la chambre, et l'ergot 19 maintient la mâchoire 13 ouverte comme représenté figure 5. Lors de la remontée de la tige filetée 8, cette dernière repousse le manchon 18 dans la chambre, libérant ainsi la mâchoire qui peut venir se refermer dans la gorge 12. De préférence, le manchon a le même diamètre que la tige filetée 8.

Bien que seul un mode de réalisation de l'invention ait été décrit, il est évident que toute modification apportée par l'Homme de l'Art dans l'esprit de l'invention, ne sortirait pas du cadre de la présente invention. Par exemple, un ressort hélicoïdal 21 peut être disposé entre l'arbre 6 et le rotor 5, de manière à annuler plus rapidement l'aimantation rémanente du dispositif en cas d'incident. De même, n'importe quel moyen peut être utilisé pour ne donner à l'arbre 6 qu'un seul degré de liberté en rotation et aucun en translation.

Les ergots 10 prévus pour interdire la rotation de l'écrou 9 peuvent être supprimés si le couple de blocage en rotation de cet écrou est obtenu par un autre moyen. Enfin, il faut noter que la présente invention présente l'avantage de limiter le nombre de bobines électriques nécessaire par rapport aux dispositifs connus de ce type.

## Revendications

1. Dispositif électromagnétique du type vis-écrou à sécurité, prévu pour le déplacement vertical dans une enceinte amagnétique étanche et cylindrique des barres de commande d'un réacteur nucléaire, comprenant en combinaison un stator (4) disposé autour de ladite enceinte (3) à sa partie supérieure, et, à l'intérieur de ladite enceinte (3), dans sa partie supérieure, un rotor (5) imprimant par l'intermédiaire d'un arbre (6) un mouvement de rotation à une tige filetée (8), un écrou (9) coopérant avec ladite tige filetée (8) et pouvant coulisser verticalement sans tourner à l'intérieur de ladite enceinte (3) et supportant lesdites barres de commande (1) et une mâchoire (13) qui, lorsqu'elle est ouverte, laisse choir au fond de ladite enceinte l'ensemble constitué par ladite tige filetée (8) et l'écrou (9) solidaire desdites barres de commande (1), ledit dispositif étant caractérisé en ce que, ledit rotor est libre en translation axiale le long de son arbre (6) qu'il entraîne en rotation mais qui est fixe en translation, ledit arbre (6) se prolongeant vers le bas sur toute la hauteur de ladite enceinte (3) et entraînant ladite tige filetée creuse (8) à l'extrémité supérieure de laquelle est pratiquée une gorge (12), coopérant avec ladite mâchoire (13) qui est articulée et comprend une partie (14) solidaire dudit rotor (5) et une autre partie (15) solidaire de l'arbre (6), de telle manière que ladite mâchoire (13) soit actionnée par les mouvements de translation du rotor (5).

2. Dispositif selon la revendication 1, caractérisé en ce que la longueur dudit arbre (6) est telle que ce dernier pénètre encore dans ladite tige filetée (8) lorsqu'elle est tombée au fond de l'enceinte (3).

3. Dispositif selon la revendication 2, caractérisé en ce que des moyens sont prévus pour maintenir ladite mâchoire (13) ouverte tant que la gorge (12) de ladite tige filetée (8) n'est pas en regard des dents de ladite mâchoire (13).

4. Dispositif selon la revendication 3, caractérisé en ce que lesdits moyens sont constitués par un manchon (18) pourvu d'un ergot (19), une chambre annulaire étant prévue dans ledit arbre (6), chambre dans laquelle ladite tige filetée (8) pousse ledit manchon (18) lorsqu'elle prend une position telle que ladite gorge (12) vienne en regard des dents de ladite mâchoire (13).

5. Dispositif selon l'une quelconque des revendications 2 à 4, caractérisé en ce que le bord de l'extrémité supérieure de ladite tige filetée (8) est chanfreiné de manière à permettre son introduction dans ladite mâchoire (13) lorsque ledit rotor (5) est attiré vers le haut.

## Patentansprüche

1. Elektromagnetische Sicherheitsvorrichtung vom Typ mit Schraube und Mutter, zur senkrechten Bewegung der Steuerstäbe eines Kernreaktors in einem zylindrischen dichten, unmagnetischen Gehäuse, mit der Kombination aus einem am oberen Teil des genannten Gehäuses (3) um dieses herum angeordneten Stator (4) und einem innerhalb des genannten Gehäuses (3) und in seinem oberen Teil angeordneten Rotor (5), der über eine Welle (6) eine Drehbewegung einer Gewindestange (8) aufprägt, einer mit der Gewindestange (8) zusammenwirkenden Mutter (9), die drehfest im Inneren des Gehäuses (3) in senkrechter Richtung verschoben werden kann und die Steuerstäbe (1) trägt, und aus einer Backe (13), die im geöffneten Zustand die Gesamtheit aus der Gewindestange (8) und der mit den Stuerstäben (1) fest verbundenen Mutter (9) auf den Boden des genannten Gehäuses herabfallen läßt, wobei die Vorrichtung dadurch gekennzeichnet ist, daß der genannte Rotor eine axiale Translationsbewegung längs seiner durch ihn mit einer Rotationsbewegung angetriebenen, jedoch translationsfesten Welle (6) frei ausführen kann, wobei die Welle (6) über die gesamte Höhe des genannten Gehäuses (3) nach unten verlängert ist und die genannte, hohle Gewindestange (8) antreibt, an deren oberem Ende eine Nut (12) angebracht ist, welche mit der genannten Backe (13) zusammenwirkt, die angelenkt ist und einen mit dem Rotor (5) fest verbundene Teil (14) und einen weiteren, mit der Welle (6) fest verbundenen Teil (15) umfaßt, dergestalt, daß die genannte Backe (13) durch die Translationsbewegungen des Rotors (5) betätigt wird.

2. Vorrichtung nach Anspruch 1, dadurch gekennzeichnet, daß die Länge der Welle (6) derart ist, daß diese noch in die Gewindestange (8) eindringt, wenn sie auf den Boden des Gehäuses (3) herabgefallen ist.

3. Vorrichtung nach Anspruch 2, dadurch gekennzeichnet, daß Mittel vorgesehen sind, um die genannte Backe (13) so lange offen zu halten, wie die Nut (12) der Gewindestange (8) sich nicht gegenüber den Zähnen der genannten Backe (13) befindet.

4. Vorrichtung nach Anspruch 3, dadurch gekennzeichnet, daß die genannten Mittel durch eine Hülse (18) gebildet sind, welche mit einem Vorsprung (19) versehen ist, wobei eine Ringkammer in der genannten Welle (6) vorgesehen ist, in welche die Gewindestange (8) die Hülse (18) hineindrückt, wenn sie eine solche Stellung einnimmt, daß die genannte Nut (12) sich gegenüber den Zähnen der genannten Backe (13) befindet.

5. Vorrichtung nach einem der Ansprüche 2 bis 4, dadurch gekennzeichnet, daß der Rand des oberen Endes der Gewindestange (8) so abgeschrägt ist, daß ihre Einführung in die Backe (13) ermöglicht wird, wenn der Rotor (5) nach oben gezogen ist.

**Claims**

1. Electromagnetic safety screw-and-nut device for the vertical displacement, in a sealing-tight non-magnetic cylindrical housing, of the control rods of a nuclear reactor, comprising in combination a stator (4) arranged about the said housing (3) at the upper portion thereof and, within the said housing (3), in the upper portion thereof, a rotor (5) which by means of a shaft (6) imparts a rotational movement to a screwthreaded rod (8), a nut (9) cooperating with the said screwthreaded rod (8) and slidable vertically without turning within the said housing (3) and supporting the said control rods (1), and a jaw system (13) which when opened allows to fall to the bottom of the said housing the assembly constituted by the said screwthreaded rod (8) and the nut (9) integral with the said control rods (1), which device is characterised in that the said rotor is free to be displaced axially along its shaft (6) which it drives in rotational movement but which is fixed against displacement, the said shaft (6) extending downwards over the entire height of the said housing (3) and entraining the said hollow screwthreaded rod (8), on whose upper end there is formed a groove (12) co-operating with the said jaw system (13), the latter being articulated and including a part (14) integral with the said rotor (5) and another part (15) which is integral with the shaft (6), in such a manner that the said jaw system (13) is actuated by the displacements of the rotor (5).

2. Device according to claim 1, characterised in that the length of the said shaft (6) is such that the latter still extends into the said screwthreaded rod when the rod has fallen to the bottom of the housing (3).

3. Device according to claim 2, characterised in that means are provided for holding the said jaw system (13) open as long as the groove (12) of the said screwthreaded rod (8) is not opposite the teeth of the said jaw system (13).

4. Device according to claim 3, characterised in that the said means are constituted by a sleeve (18) provided with a stud (19), an annular chamber being provided in the said shaft (6) into which chamber the said screwthreaded rod (8) pushes the said sleeve (18) when said rod takes up a position such that the said groove (12) comes opposite the teeth of the said jaw system (13).

5. Device according to any one of claims 2 to 4, characterised in that the edge of the upper end of the said screwthreaded rod (8) is bevelled in such a way as to allow it to be introduced into the said jaw system (13) when the said rotor (5) is attracted upwardly.

FIG_1

FIG_2

FIG_3

0 033 271

FIG_4

FIG_5

2